# EUROPEAN PATENT SPECIFICATION

(11) **EP 1 594 291 B1**
(45) Date of publication and mention of the grant of the patent: **17.04.2013**
(21) Application number: 05009980.3
(22) Date of filing: 06.05.2005
(51) Int. Cl.: H04M 1/02

(54) **Sliding/folding-type portable apparatus**
Verschiebbare, aufklappbare tragbare Vorrichtung
Dispositif portable repliable coulissant

(30) Priority: 06.05.2004 US 568974 P; 06.04.2005 KR 2005028428
(43) Date of publication of application: 09.11.2005
(73) Proprietor: Samsung Electronics Co., Ltd., Suwon-si, Gyeonggi-do, 443-742 (KR)
(72) Inventor: Ahn, Chi-Young,, Suwon-si, Gyeonggi-do (KR); Kim, Young S.,, Suwon-si, Gyeonggi-do (KR); Hwang, Chang-Hwan,, Suwon-si, Gyeonggi-do (KR)
(74) Representative: Grünecker, Kinkeldey, Stockmair & Schwanhäusser

(56) References cited:
- EP-A- 1 406 427
- EP-A- 1 411 707
- WO-A-2004/028010
- WO-A1-03/100999
- WO-A2-2004/021681
- US-A1- 2003 202 656
- US-A1- 2003 206 394
- US-B1- 6 714 802

## Description

### BACKGROUND OF THE INVENTION

### 1. Field of the Invention

The present invention relates to portable apparatuses with a digital communication mode including cellular phones, PDAs (Personal Digital Assistants), HHPs (Hand Held Phones), game phones, TV phones, chatting phones, and camera phones, and more particularly to a portable apparatus combining a sliding motion with a folding motion.

### 2. Description of the Related Art

In general, "portable communication apparatus" refers to an electronic apparatus that a user can carry to perform wireless communication. To facilitate portability, designs of such portable communication apparatuses tend to be compact, slim, and light, and are moving toward providing multimedia availability, with a wider variety of functions. In particular, future portable communication apparatuses will incorporate greater multi-functionality and be capable of multi-purpose utilization, in addition to being even more compact and light. Future designs will also incorporate the ability for modificationto be suitable for various multimedia or Internet environments. Portable communication apparatuses are now commonly used by people of all ages and all walks of life throughout the world, and are recognized by most consumers as a nearly indispensable commodity to be carried all the time.

Conventional portable communication apparatuses may be classified into various categories according to appearance, such as a bar-type portable communication apparatus, a flip-type portable communication apparatus, and a folder-type portable communication apparatus. Portable communication apparatuses may also be classified as neck wearable or wrist wearable according to the position or way in which a user wears the portable communication apparatus. In addition, portable communication apparatuses may be classified into a rotation-type portable communication apparatus and a sliding-type portable communication apparatus according to the manner of opening and closing the portable communication apparatus. These variously classified portable communication apparatuses can be easily understood by those skilled in the art.

Conventional portable communication apparatuses can now transmit data wirelessly at a high speed in addition to performing basic voice communication function in response to consumers' demand.

Recent trends in portable communication apparatus design tend to include a camera lens to obtain video signals for transmission. Current portable communication apparatuses have an external or embedded camera lens module that enables a user to perform video communication with a desired partner or to photograph a desired subject.

However, sliding-type or folding-type conventional portable communication apparatuses have a problem in that, although they necessarily have a display device and a number of keys, the display device is difficult to watch while the apparatus is horizontal, and the keys are inconvenient to operate.

In a multimedia-oriented environment accommodating various consumer-friendly media, for example, a single portable apparatus is expected to incorporate not only a voice communication function, but also video communication, game, music listening, TV or video watching, chatting, and Internet functions as a whole. As a result of such change in telecommunication environments, it is desirable to actively cope with various user interfacing environments. In consideration of usability of portable apparatuses, the user interfacing environments dictate the convenience of portable apparatuses.

In the user interface environment of a single portable apparatus, therefore, the most critical factor is the convenience in the data input and output interfacing environments. The present invention provides the optimum interfacing environment from the viewpoint of users, in consideration of the advantages of sliding-type and folding-type portable apparatuses.

WO2004/028 010 A1 discloses a multi display device that is particularly suited to provide a large sized screen. Such a large sized screen is said to be possible without deteriorating from the mobility of a corresponding portable terminal. According to one embodiment of the corresponding portable terminal, this comprises a key input part and two further panel housings. The first panel housing is some kind of sliding housing, adapted to travel along a longitudinal direction of the key input part while continuously facing it to expose or hide a top surface of this key input part. The other panel housing is some kind of a folding housing, adapted to rotate about a first hinge axis to fold on or unfold from the other panel housing. The two panel housings are connected by a first and second connection means.

WO03/1/00999 A1 discloses a joint which allows folding and rotating of corresponding housings relative to each other.

WO2004/021681 A2 discloses a mobile telephone with a dual-movement hinge. Mobile station comprises a first enclosure section and a second enclosure section. Both are connected by a hinge sleeve which allows a rotation of the corresponding sections relative to each other. It is also possible to longitudinally move the first enclosure section with respect to the second enclosure section by separating a hinge sleeve from another hinge sleeve.

### SUMMARY OF THE INVENTION

Accordingly, the present invention has been made to solve the above-mentioned problems occurring in the prior art, and an object of the present invention is to provide a portable apparatus which combines the advantages of a sliding-type portable apparatus with those of a folding-type portable apparatus and which, particularly, provides a wider display device, convenience in key operation, and adaptability to compactness.

Another object of the present invention is to provide a portable apparatus having convenient data input interfacing in various modes, including a game mode, a chatting mode, an Internet mode, a TV watching mode, a video watching mode, and a camera photographing mode.

Another object of the present invention is to provide a portable apparatus having a number of keyboards positioned on each of three housings for convenient key operation.

Another object of the present invention is to provide a portable apparatus having a numeric keyboard positioned on a body housing for convenient watching in the vertical direction, an alphabet character keyboard positioned on a sliding housing for convenient watching in the horizontal direction, and a function keyboard positioned on a folding housing for convenient watching in the vertical direction to optimize the user interfacing environment.

Another object of the present invention is to provide a portable apparatus having convenient user interfacing in a chatting mode.

In order to accomplish these objects, there is provided a portable apparatus according to independent claim 1. Further, preferred features may be found in the dependent claims appended thereto.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view illustrating a sliding/folding-type portable apparatus according to a preferred embodiment of the present invention;
FIG. 2 is a rear perspective view the portable apparatus of FIG. 1;
FIG. 3 is a perspective view illustrating a sliding/folding-type portable apparatus, after sliding, according to a preferred embodiment of the present invention;
FIG. 4 is a perspective view illustrating a folding housing, after full movement about first and second hinge axes, according to a preferred embodiment of the present invention;
FIG. 5 is a perspective view illustrating the folding housing, when open, of FIG. 4; and
FIG. 6 is a rear perspective view of the folding housing of FIG. 5.

### DETAILED DESCRIPTION OF THE PREFERRED EMBODIMENT

Hereinafter, a preferred embodiment of the present invention will be described with reference to the accompanying drawings. In the following description of the present invention, a detailed description of known functions and configurations incorporated herein is omitted to avoid making the subject matter of the present invention unclear.

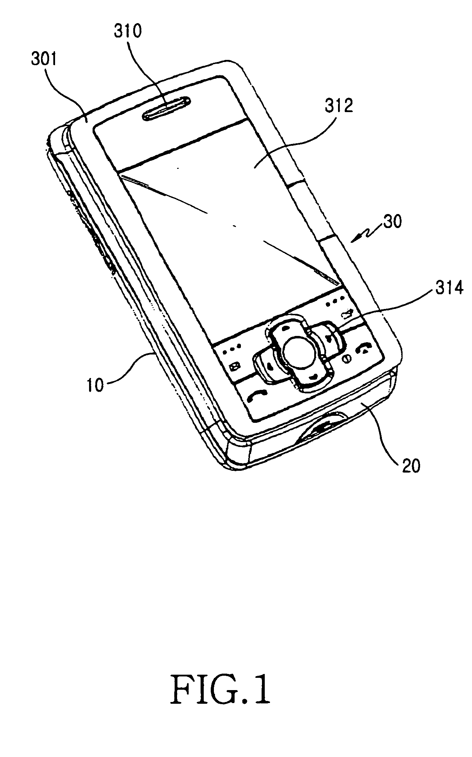

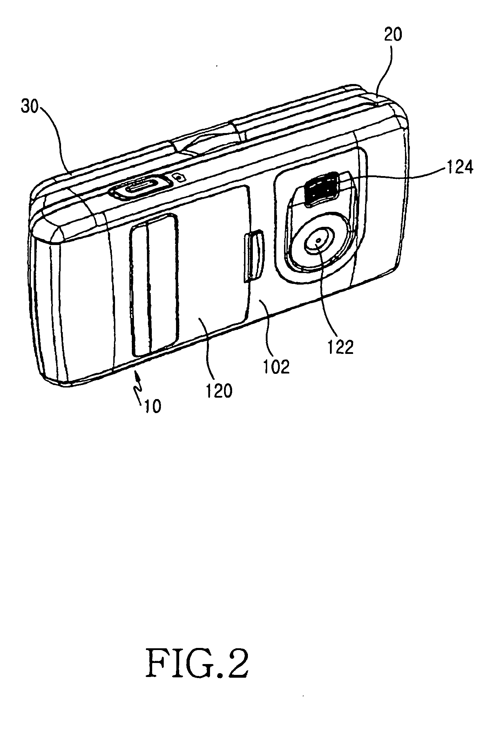

As shown in FIGs. 1 and 2, a sliding/folding-type portable apparatus according to the present invention includes a body housing 10, a sliding housing 20, and a folding housing 30, all of which have the shape of a plate. As shown in FIG 1, the folding housing 30 has a speaker device 310, a display device 312, and a third keyboard 314 positioned on the top surface 301 thereof. The speaker device 310 is adjacent to the display device 312, which is adjacent to the third keyboard 314. The third keyboard 314 is mainly composed of function keys. The display device 312 may be composed of an LCD or a touch screen.

As shown in FIG 2, the body housing 10 has a battery pack 120, a camera lens 122, and a lighting device 124 positioned on the bottom surface thereof 102. The battery pack 120 is adjacent to the camera lens 122, which is adjacent to the lighting device 124. The battery pack 120 is detachable.

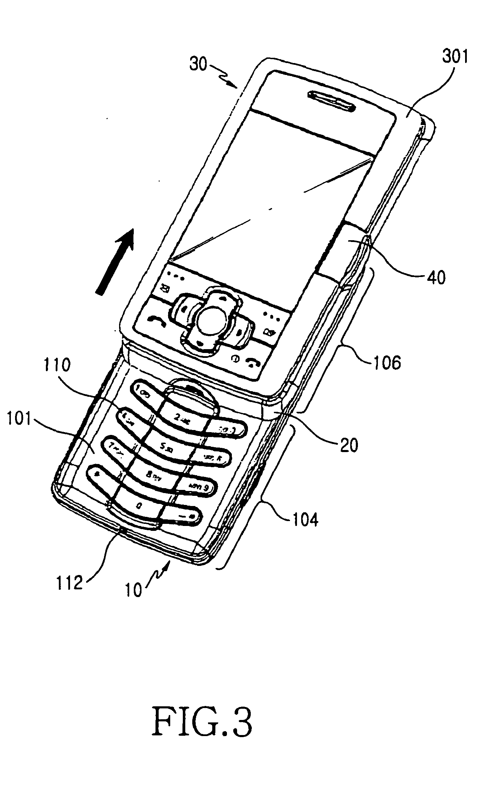

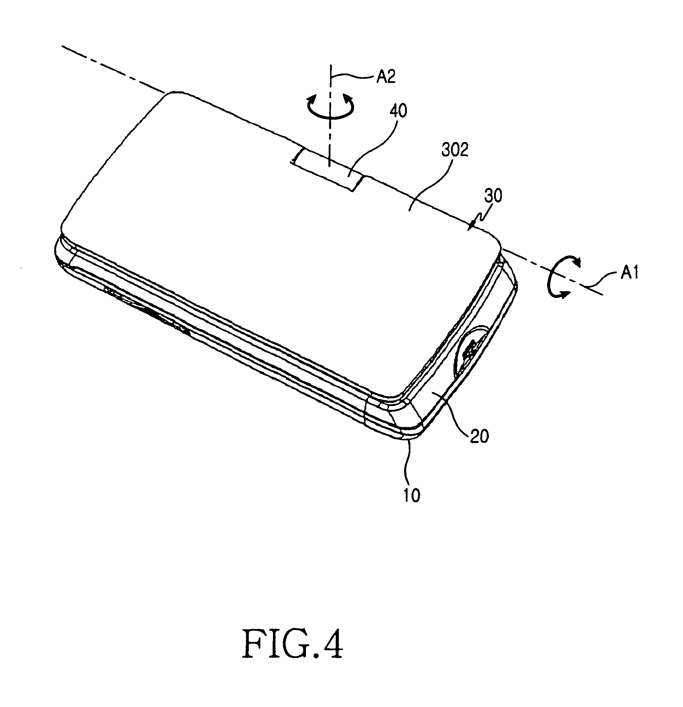

As shown in FIGs. 3 to 6, a portable apparatus according to an embodiment of the present invention includes a body housing 10; a sliding housing 20 adapted to travel along the longitudinal direction of the body housing 10 while continuously facing it to expose or hide a predetermined region of the top surface 101 of the body housing 10; a folding housing 30 adapted to rotate about a first hinge axis A1 to fold on or unfold from the sliding housing 20 and to rotate about a second hinge axis A2, which is perpendicular to the first hinge axis A1, to reverse the top and bottom surfaces 301 and 302 thereof; and a dual-axis hinge sliding module 40 connected between the sliding housing 20 and the folding housing 30 to provide the folding housing 30 with the first and second hinge axes A1 and A2. FIG. 3 shows the sliding housing 20 after sliding. FIG. 4 shows the folding housing 30 with its top and bottom surfaces 301 and 302 fully reversed from a position shown in FIG. 1. Particularly, the bottom surface 302 of the folding housing faces the top surface of the sliding housing in a state as shown in FIG. 1 and the top surface 301 of the folding housing faces the top surface of the sliding housing in a state as shown in FIG. 4.

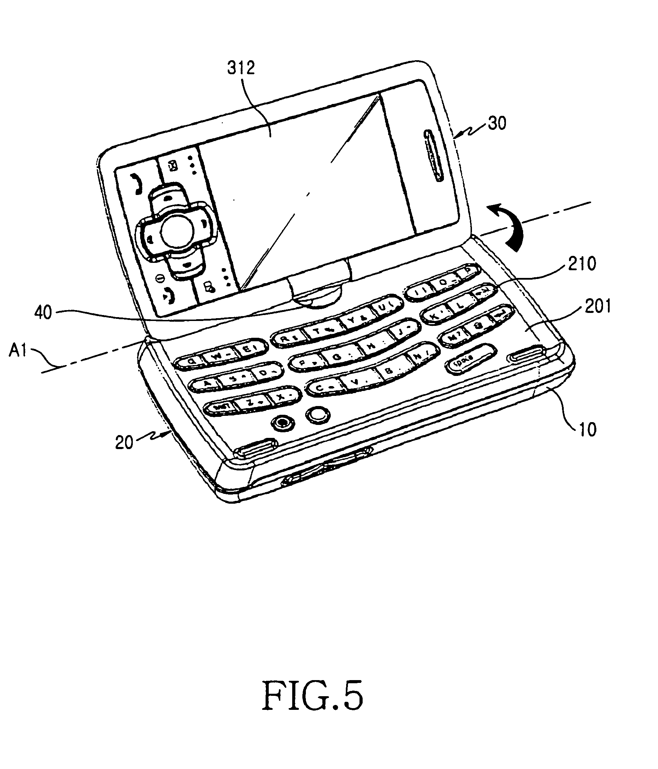

The dual-axis hinge sliding module 40 is positioned on a lateral end of the sliding housing 20, particularly at the center of an lateral end thereof. FIG. 5 shows a state wherein the sliding housing 20 is rotated about the first hinge axis A1.

Preferably, the first hinge axis A 1 is parallel to the sliding direction of the sliding housing 20 and the second hinge axis A2 is perpendicular both to the first hinge axis A1 and to the sliding direction.

As shown in FIG. 3, the top surface 101 of the body housing includes a first region 104 selectively exposed or hidden according to whether the sliding housing 20 is slid or not and a second region 106 hidden regardless of whether the sliding housing 20 is slid or not. The first and second regions 104 and 106 are adjacent to each other. The first region 104 has a first keyboard 110 composed of an array of a number of keys positioned thereon. The first keyboard 110 is composed of an array of keys convenient to watch in the vertical direction, particularly 3x4 array of numeric keys, as shown in FIG. 3. Reference numeral 112 refers to a microphone device.

As shown in FIG. 5, the sliding housing has a second keyboard 210 positioned on the top surface 201 thereof, which is composed of an array of a number of keys exposed or hidden according to whether the folding housing 30 is folded or not. Particularly, the top surface 201 of the sliding housing and, accordingly, the second keyboard 210 are exposed or hidden according to whether the folding housing 30 is folded or not. The second keyboard 210 is composed of QWERTY key array including alphabet characters, and particularly of an array of keys convenient to use when the apparatus is oriented in the horizontal direction as shown in FIG. 5.

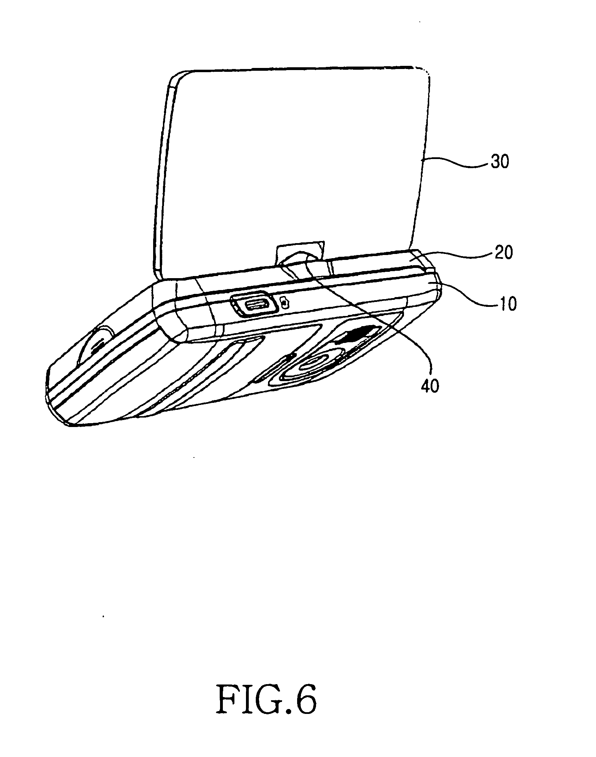

The folding housing 30 is adapted to rotate 0-180° about the first hinge axis A1 and rotate 0-180° about the second hinge axis A2. As the folding housing 30 is rotated about the first hinge axis A1 from a position as shown in FIG. 1, rotated 180° about the second hinge axis A2, and again rotated about the first hinge axis A1, it is folded on the sliding housing 20 as shown in FIG. 4. The bottom surface 302 of the folding housing is preferably a planar surface, as shown in FIG. 6.

When rotated about the first hinge axis A1 from a position as shown in FIG. 4, the folding housing 30 is positioned as shown in FIG. 5 or 6.

In summary, the state shown in FIG. 1 is suitable for a communication or camera mode, the state shown in FIG 3 is suitable for a communication mode, and the state shown in FIG. 5 is suitable for a mode requiring complicated key input operation, such as a chatting mode, which is an exchange of text messages.

As mentioned above, the portable apparatus according to the present invention has three housings connected to one another in such a manner that they can slide and fold and provided with respective keyboards. This provides a wider display device, convenience in key operation, and adaptation to compactness. Particularly, the inventive portable apparatus has a numeric keyboard positioned on a body housing for convenient watching of the display when the apparatus is in the vertical direction, an alphabet character keyboard positioned on a sliding housing for convenient use when the apparatus is in the horizontal direction, and a function keyboard positioned on a folding housing for convenient use when the apparatus is in the vertical direction to optimize the user's data input interfacing environment.

While the invention has been shown and described with reference to certain preferred embodiments thereof, it will be understood by those skilled in the art that various changes in form and details may be made therein without departing from the scope of the invention as defined by the appended claims.

## Claims

1. A portable apparatus comprising:
a body housing (10);
a sliding housing (20) adapted to slide along a longitudinal direction of the body housing (10) while continuously facing it to expose or hide a top surface (101) of the body housing, and
a folding housing (30) having a first surface (301) and a second surface (302) opposite to the first surface, said folding housing (30) adapted to rotate about a first hinge axis (A1) to fold on or unfold from the sliding housing (20), wherein the sliding housing (20) is adapted to slide along said longitudinal direction together with the folding housing (30) **characterized in that** said folding housing (30) is rotatable about a second hinge axis (A2) which is perpendicular to the first hinge axis to alternate the first surface (301) and the second surface (302) to face the sliding housing (20), and that a dual axis hinge sliding module (40) is connected between the sliding housing (20) and the folding housing (30) to provide the folding housing with a first and second hinged axis (A1, A2).

2. The portable apparatus as claimed in claim 1, wherein the dual-axis hinge sliding module (40) is positioned on a lateral end of the sliding housing.

3. The portable apparatus as claimed in claim 2, wherein the dual-axis hinge sliding module (40) is positioned at a center of the lateral end.

4. The portable apparatus as claimed in claim 1, wherein the first hinge axis (A1), is parallel to the sliding direction of the sliding housing (20) and the second hinge axis (A2) is perpendicular both to the first hinge axis and to the sliding direction.

5. The portable apparatus as claimed in claim 1, wherein the top surface (101) of the body housing (10) comprises a first region (104) selectively exposed or hidden according to whether the sliding housing (20) is slid and a second region (106) hidden regardless of whether the sliding housing is slid, and a first keyboard (110) composed of an array of a number of keys is positioned in the first region (104).

6. The portable apparatus as claimed in claim 5, wherein the first keyboard (110) is composed of a 3x4 array of keys.

7. The portable apparatus as claimed in claim 5, wherein the first keyboard (110) is composed of an array of keys for use when the apparatus is in the vertical direction.

8. The portable apparatus as claimed in claim 5, wherein the sliding housing (20) has a second keyboard (210) positioned on the top surface (201) thereof, which is composed of an array of a number of keys exposed or hidden according to whether the folding housing (30) is folded, and the top surface is exposed or hidden according to whether the folding housing is folded.

9. The portable apparatus as claimed in claim 8, wherein the second keyboard (210) is composed of a QWERTY key array including alphabet characters.

10. The portable apparatus as claimed in claim 8, wherein the second keyboard (210) is composed of an array of keys for use when the apparatus is in the horizontal direction.

11. The portable apparatus as claimed in claim 5, wherein the folding housing (30) comprises a display device (312) positioned on the top surface (301) thereof and a third keyboard (314) composed of an array of a number of keys positioned adjacent to the display device.

12. The portable apparatus as claimed in claim 1, wherein the body housing (10) has, on its bottom surface (102), a battery pack (120), a camera lens (122) adjacent to the battery pack, and a lighting device (124) adjacent to the camera lens.

13. The portable apparatus as claimed in claim 1, wherein the folding housing (30) is adapted to rotate 0-180° about the first hinge axis (A1), and rotate 0-180° about the second hinge axis (A2).

## Patentansprüche

1. Tragbare Vorrichtung, umfassend:
ein Körpergehäuse (10);
ein Gleitverschiebungsgehäuse (20), das dafür ausgelegt ist, sich entlang einer Längsrichtung des Körpergehäuses (10) gleitend zu verschieben, während es kontinuierlich zu diesem weist, um eine obere Oberfläche (101) des Körpergehäuses freizulegen oder zu verbergen, und
ein Klappgehäuse (30), das eine erste Oberfläche (301) und eine zweite Oberfläche (302) entgegengesetzt bzw. gegenüberliegend zu der ersten Oberfläche aufweist, wobei das Klappgehäuse (30) dafür ausgelegt ist, sich um eine erste Gelenkachse (A1) zu drehen, um auf das Gleitverschiebungsgehäuse (20) zu klappen oder von diesem wegzuklappen, wobei das Gleitverschiebungsgehäuse (20) dafür ausgelegt ist, sich entlang der Längsrichtung zusammen mit dem Klappgehäuse (30) gleitend zu verschieben, **dadurch gekennzeichnet, dass** das Klappgehäuse (30) um eine zweite Gelenkachse (A2) drehbar ist, die senkrecht zu der ersten Gelenkachse ist, um die erste Oberfläche (301) und die zweite Oberfläche (302) dahingehend zu wechseln, dass diese zu dem Gleitverschiebungsgehäuse (20) weisen, und dass ein Doppelachsengelenkgleitverschiebungsmodul (40) zwischen dem Gleitverschiebungsgehäuse (20) und dem Klappgehäuse (30) verbunden ist, um das Klappgehäuse mit einer ersten und zweiten angelenkten Achse (A1, A2) zu versehen.

2. Tragbare Vorrichtung nach Anspruch 1, wobei das Doppelachsengelenkgleitverschiebungsmodul (40) an einem seitlichen Ende des Gleitverschiebungsgehäuses positioniert ist.

3. Tragbare Vorrichtung nach Anspruch 2, wobei das Doppelachsengelenkgleitverschiebungsmodul (40) an einer Mitte des seitlichen Endes positioniert ist.

4. Tragbare Vorrichtung nach Anspruch 1, wobei die erste Gelenkachse (A1) parallel zu der Gleitverschiebungsrichtung des Gleitverschiebungsgehäuses (20) ist und die zweite Gelenkachse (A2) senkrecht sowohl zu der ersten Gelenkachse wie auch zu der Gleitverschiebungsrichtung ist.

5. Tragbare Vorrichtung nach Anspruch 1, wobei die obere Oberfläche (101) des Körpergehäuses (10) umfasst: einen ersten Bereich (104), der entsprechend, ob das Gleitverschiebungsgehäuse (20) gleitverschoben ist, selektiv freigelegt oder verborgen ist, und einen zweiten Bereich (106), der unabhängig davon, ob das Gleitverschiebungsgehäuse gleitverschoben ist, verborgen ist, wobei eine erste Tastatur (110), die aus einer Anordnung einer Anzahl von Tasten zusammengesetzt ist, in dem ersten Bereich (104) positioniert ist.

6. Tragbare Vorrichtung nach Anspruch 5, wobei die erste Tastatur (110) aus einer 3×4-Anordnung von Tasten zusammengesetzt ist.

7. Tragbare Vorrichtung nach Anspruch 5, wobei die erste Tastatur (110) aus einer Anordnung von Tasten zur Verwendung, wenn die Vorrichtung in der vertikalen Richtung ist, zusammengesetzt ist.

8. Tragbare Vorrichtung nach Anspruch 5, wobei das Gleitverschiebungsgehäuse (20) eine zweite Tastatur (210) aufweist, die an der oberen Oberfläche (201) hiervon positioniert ist und die aus einer Anordnung einer Anzahl von Tasten zusammengesetzt ist, die entsprechend, ob das Klappgehäuse (30) geklappt ist, freigelegt oder verborgen sind, und die obere Oberfläche entsprechend, ob das Klappgehäuse geklappt ist, freigelegt oder verborgen ist.

9. Tragbare Vorrichtung nach Anspruch 8, wobei die zweite Tastatur (210) aus einer QWERTY-Tastenanordnung, die Alphabetschriftzeichen beinhaltet, zusammengesetzt ist.

10. Tragbare Vorrichtung nach Anspruch 8, wobei die zweite Tastatur (210) aus einer Anordnung von Tasten zur Verwendung, wenn die Vorrichtung in der horizontalen Richtung ist, zusammengesetzt ist.

11. Tragbare Vorrichtung nach Anspruch 5, wobei das Klappgehäuse (30) umfasst: eine Anzeigevorrichtung (312), die an der oberen Oberfläche (301) hiervon positioniert ist, und eine dritte Tastatur (314), die aus einer Anordnung einer Anzahl von Tasten zusammengesetzt ist, die benachbart zu der Anzeigevorrichtung positioniert sind.

12. Tragbare Vorrichtung nach Anspruch 1, wobei das Körpergehäuse (10) an seiner unteren Oberfläche (102) einen Batteriepack (120), eine Kameralinse (122) benachbart zu dem Batteriepack und eine Beleuchtungsvorrichtung (124) benachbart zu der Kameralinse aufweist.

13. Tragbare Vorrichtung nach Anspruch 1, wobei das Klappgehäuse (30) dafür ausgelegt ist, sich um 0° bis 180° um die erste Gelenkachse (A1) zu drehen und sich um 0° bis 180° um die zweite Gelenkachse (A2) zu drehen.

## Revendications

1. Dispositif portable comprenant :
un boîtier de corps (10) ;
un boîtier coulissant (20) adapté à coulisser dans une direction longitudinale du boîtier de corps (10) en étant toujours tourné vers celui-ci, pour faire apparaître ou cacher la surface supérieure (101) du boîtier de corps, et
un boîtier repliable (30) ayant une première surface (301) et une seconde surface (302) opposée à la première surface, ledit boîtier repliable (30) étant adapté à tourner autour d'un premier axe d'articulation (A1) pour se plier ou se déplier par rapport au boîtier coulissant (20), dans lequel le boîtier coulissant (20) est adapté à coulisser dans ladite direction longitudinale en même temps que le boîtier repliable (30), **caractérisé en ce qu'**on peut faire tourner ledit boîtier repliable (30) autour d'un second axe d'articulation (A2) perpendiculaire au premier axe d'articulation pour placer alternativement la première surface (301) et la seconde surface (302) en face du boîtier coulissant (20) et **en ce qu'**un module coulissant d'articulation à deux axes (40) est relié entre le boîtier coulissant (20) et le boîtier repliable (30) pour doter le boîtier repliable d'un premier et d'un second axe articulé (A1, A2).

2. Dispositif portable selon la revendication 1, dans lequel le module coulissant d'articulation à deux axes (40) est positionné sur une extrémité latérale du boîtier coulissant.

3. Dispositif portable selon la revendication 2, dans lequel le module coulissant d'articulation à deux axes (40) est positionné au centre de l'extrémité latérale.

4. Dispositif portable selon la revendication 1, dans lequel le premier axe d'articulation (A1) est parallèle à la direction de coulissement du boîtier coulissant (20) et le second axe d'articulation (A2) est perpendiculaire à la fois au premier axe d'articulation et à la direction de coulissement.

5. Dispositif portable selon la revendication 1, dans lequel la surface supérieure (101) du boîtier de corps (10) comprend une première région (104) apparente ou cachée de manière sélective en fonction du fait que le boîtier coulissant (20) a coulissé et une seconde région (106) cachée indépendamment du fait que le boîtier coulissant a coulissé, et un premier clavier (110) constitué d'une matrice d'un certain nombre de touches est positionné dans la première région (104).

6. Dispositif portable selon la revendication 5, dans lequel le premier clavier (110) est constitué d'une matrice de 3x4 touches.

7. Dispositif portable selon la revendication 5, dans lequel le premier clavier (110) est constitué d'une matrice de touches destinée à être utilisée lorsque le dispositif est en direction verticale.

8. Dispositif portable selon la revendication 5, dans lequel le boîtier coulissant (20) comporte un deuxième clavier (210) positionné sur sa surface supérieure (201), constitué d'une matrice d'un certain nombre de touches apparentes ou cachées en fonction du fait que le boîtier repliable (30) est replié, et la surface supérieure est apparente ou cachée en fonction du fait que le boîtier repliable est replié.

9. Dispositif portable selon la revendication 8, dans lequel le deuxième clavier (210) est constitué d'une matrice de touches QWERTY incluant des caractères alphabétiques.

10. Dispositif portable selon la revendication 8, dans lequel le deuxième clavier (210) est constitué d'une matrice de touches destinée à être utilisée lorsque le dispositif est en direction horizontale.

11. Dispositif portable selon la revendication 5, dans lequel le boîtier repliable (30) comprend un dispositif d'affichage (312) positionné sur sa surface supérieure (301) et un troisième clavier (314) constitué d'une matrice d'un certain nombre de touches positionné de manière adjacente au dispositif d'affichage.

12. Dispositif portable selon la revendication 1, dans lequel le boîtier de corps (10) comporte, sur sa surface inférieure (102), un bloc de batterie (120) un objectif de dispositif de prise de vue (122) adjacent au bloc de batterie et un dispositif d'éclairage (124) adjacent à l'objectif de dispositif de prise de vue.

13. Dispositif portable selon la revendication 1, dans lequel le boîtier repliable (30) est adapté à tourner de 0° à 180° autour du premier axe d'articulation (A1) et à tourner de 0° à 180° autour du second axe d'articulation (A2).
